# EUROPEAN PATENT APPLICATION

(11) **EP 4 814 851 A1**
(43) Date of publication of application: **30.09.2026**
(21) Application number: 25226541.8
(22) Date of filing: 22.12.2025
(51) Int. Cl.: G06Q 50/02, A01B 79/00

(54) **METHODS AND SYSTEMS FOR RECOMMENDING ADAPTIVE CROP PROTOCOL WITHOUT ADVERSELY IMPACTING YIELD AND EMISSIONS**

(30) Priority: 25.03.2025 IN 202521028032
(71) Applicant: Tata Consultancy Services Limited, Maharashtra (IN)
(72) Inventor: KULAT, Rushikesh Dattatraya, 400601 Thane, Maharashtra (IN); PATIL, Vidit Mahesh, 400601 Thane, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

The disclosure relates generally to methods and systems for recommending adaptive crop protocol without adversely impacting yield and emissions. Conventional techniques in crop protocol recommendation may not always take goals of the farmers into consideration and hence may not provide balance between the yield, water usage and the emissions. The present disclosure solves the technical problems in the art by balancing the agriculture yield with environmental sustainability, ensuring that productivity does not come at the cost of environment while the crop protocol is recommended. The present disclosure recommends the adaptive crop protocol of the crop to be cultivated by the user, based on the plurality of transformed user goals, using a trained ensemble model and an agriculture operation sequencing technique. Further, a Yield At Cost of Environment (YACE) index is determined which helps in assessing an environment sustainability of the recommended adaptive crop protocol.

## Description

### CROSS-REFERENCE TO RELATED APPLICATIONS AND PRIORITY

The present application claims priority from Indian application no. 202521028032, filed on March 25, 2025.

### TECHNICAL FIELD

The disclosure herein generally relates to precision agriculture, and, more particularly, to methods and systems for recommending adaptive crop protocol without adversely impacting yield and emissions.

### BACKGROUND

Agriculture crops undergo various agriculture operations from land preparation to getting a yield during a crop life cycle (also referred as a crop protocol or a package of practices (PoPs)). Typical agriculture operations include but are not limited to a tillage operation, a water management, a nitrogen management, a manure management, and a crop residue management. Apart from the crop harvest, some of these agriculture operations contribute to methane emission, carbon emission and nitrous oxide emission which impact the environment such as global warming and climate change. Hence modern agriculture, especially precision agriculture promotes the crop protocols that reduce these emissions without impacting the yield.

Conventional techniques in crop protocol recommendation follow either conventional agro-practices or recommendations provided by agriculture institutions as the PoPs for a given region. These conventional recommendations may not always take goals of the farmers into consideration and hence may not provide balance between the yield, water usage and the emissions. Further, the PoPs are static in nature, generalized to a particular region, conservative, and may impact on the yield in order to reduce the impact of cultivation on environment in terms of greenhouse gas (GHG) emissions. Furthermore, the conventional techniques that assess and calibrates the recommended crop protocols before implementation are limited.

### SUMMARY

Embodiments of the present disclosure present technological improvements as solutions to one or more of the above-mentioned technical problems recognized by the inventors in conventional systems.

In an aspect, a processor-implemented method for recommending adaptive crop protocol without adversely impacting yield and emissions is provided. The method comprising: receiving (i) a plurality of crop related parameters from a user, (ii) one or more soil related parameters, (iii) one or more weather related parameters, and (iv) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user; estimating one or more missing optional goals out of the plurality of user goals of the user, based on the one or more scenario parameters of the scenario, using a goal estimation technique; determining a set of scenario bounds for each of the plurality of user goals for the scenario selected by the user, based on the one or more soil related parameters, the one or more weather related parameters, and the agriculture operations data and the user goal impact data, using a scenario bound estimation technique; transforming the one or more user goals and the one or more missing optional goals of the user, using the set of scenario bounds for each of the one or more user goals, to obtain a plurality of transformed user goals for the scenario selected by the user; recommending the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations; and estimating a Yield At Cost of Environment (YACE) index for the recommended adaptive crop protocol of the crop for the scenario, using a trained YACE index estimation model based on the plurality of transformed user goals.

In another aspect, a system for recommending adaptive crop protocol without adversely impacting yield and emissions is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) a plurality of crop related parameters from a user, (ii) one or more soil related parameters, (iii) one or more weather related parameters, and (vi) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user; estimate one or more missing optional goals out of the plurality of user goals of the user, based on the one or more scenario parameters of the scenario, using a goal estimation technique; determine a set of scenario bounds for each of the plurality of user goals for the scenario selected by the user, based on the one or more soil related parameters, the one or more weather related parameters, and the agriculture operations data and the user goal impact data, using a scenario bound estimation technique; transform the one or more user goals and the one or more missing optional goals of the user, using the set of scenario bounds for each of the one or more user goals, to obtain a plurality of transformed user goals for the scenario selected by the user; recommend the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations; and estimate a Yield At Cost of Environment (YACE) index for the recommended adaptive crop protocol of the crop for the scenario, using a trained YACE index estimation model based on the plurality of transformed user goals.

In yet another aspect, there are provided one or more non-transitory machine-readable information storage mediums comprising one or more instructions which when executed by one or more hardware processors cause: receiving (i) a plurality of crop related parameters from a user, (ii) one or more soil related parameters, (iii) one or more weather related parameters, and (vi) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user; estimating one or more missing optional goals out of the plurality of user goals of the user, based on the one or more scenario parameters of the scenario, using a goal estimation technique; determining a set of scenario bounds for each of the plurality of user goals for the scenario selected by the user, based on the one or more soil related parameters, the one or more weather related parameters, and the agriculture operations data and the user goal impact data, using a scenario bound estimation technique; transforming the one or more user goals and the one or more missing optional goals of the user, using the set of scenario bounds for each of the one or more user goals, to obtain a plurality of transformed user goals for the scenario selected by the user; recommending the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations; and estimating a Yield At Cost of Environment (YACE) index for the recommended adaptive crop protocol of the crop for the scenario, using a trained YACE index estimation model based on the plurality of transformed user goals.

In an embodiment, the trained YACE index estimation model is generated by: receiving a plurality of user goal sets from a scenario dataset, wherein each user goal set of the plurality of user goal sets comprises one or more historical user goals; determining a YACE index label for each user goal set of the plurality of user goal sets, using (i) an environmental impact index (EII), and (ii) a crop protocol proximity score (CPPS); and training a machine learning (ML)-based regression model with the plurality of user goal sets and the YACE index label for each user goal set of the plurality of user goal sets, to obtain the trained YACE index estimation model.

In an embodiment, the plurality of user goals of the user are the one or more user goals and the one or more missing optional goals, and comprises (i) a percentage of a crop yield potential to be achieved, (ii) a percentage of a water usage reduction to be achieved, (iii) a percentage of a methane emission reduction to be achieved, (iv) a percentage of a nitrous oxide emission reduction to be achieved, and (v) a percentage of a carbon sequestration (CSEQ) to be achieved, the one or more scenario parameters of the scenario selected by the user comprises (i) a global positioning system (GPS) location data of an agriculture area where the crop is to be cultivated, (ii) a soil type of the agriculture area, and (iii) a crop type and a crop variety of the crop to be cultivated, the plurality of transformed user goals comprises (i) a transformed crop yield to be achieved, (ii) a transformed water usage to be achieved, (iii) a transformed methane emission to be achieved, (iv) a nitrous oxide emission to be achieved, and (v) a transformed CSEQ to be achieved, the one or more agriculture operations to be performed comprises (i) a tillage operation, (ii) a water management, (iii) a nitrogen management, (iv) a manure management, and (v) a crop residue management, and the set of scenario bounds for each of the one or more user goals comprises (i) a minimum bound, and (ii) a maximum bound.

In an embodiment, the set of scenario bounds for each of the plurality of user goals for the scenario selected by the user, is determined based on the one or more soil related parameters, the one or more weather related parameters, and the agriculture operations data and the user goal impact data, using a scenario bound estimation technique, by: generating a set of crop protocol templates from the one or more soil related parameters, the one or more weather related parameters, and the agriculture operations data and the user goal impact data, using a generative artificial intelligence (AI) model, wherein each crop protocol template of the set of crop protocol templates comprises the one or more agriculture operations; generating a scenario dataset of each crop protocol template of the set of crop protocol templates, using an agriculture-process (Ag-process) model, wherein the scenario dataset comprises one or more data records of the plurality of user goals and the set of crop protocol templates; and determining the set of scenario bounds for each of the plurality of user goals for the scenario selected by the user, using the generated scenario dataset.

In an embodiment, the trained ensemble model is a combination of one or more of: (i) a trained tillage management model, (ii) a trained water management model, (iii) a trained nitrogen management model, (iv) a trained manure management model, and (v) a trained crop residue management model, and wherein: the trained tillage management model is generated by training a machine learning (ML)-based classification model with a tillage training data, the trained water management model is generated by training the ML-based classification model with a water training data, the trained nitrogen management model is generated by training a ML-based regression model with a nitrogen training data, the trained manure management model is generated by training the ML-based regression model with a manure training data, and the trained crop residue management model is generated by training the ML-based regression model with a crop residue training data.

In an embodiment, the adaptive crop protocol of the crop is recommended, based on the plurality of transformed user goals, using a trained ensemble model and an agriculture operation sequencing technique, by: generating a plurality of agriculture operation sequences, based on the one or more agriculture operations, using the agriculture operation sequencing technique; determining an optimal agriculture operation sequence among the plurality of agriculture operation sequences, based on the plurality of transformed user goals; and determining the adaptive crop protocol of the crop to be cultivated by the user, using the optimal agriculture operation sequence and the trained ensemble model, based on the plurality of transformed user goals, wherein: the trained tillage management model takes the transformed methane emission to be achieved, the nitrous oxide emission to be achieved, and the transformed CSEQ to be achieved as an input and predicts a type of tillage operation as an output, the trained water management model takes the transformed crop yield to be achieved, the transformed water usage to be achieved, the transformed methane emission to be achieved, and the transformed CSEQ to be achieved as the input and predicts a type of water operation as the output, the trained nitrogen management model takes the transformed crop yield to be achieved, and the transformed nitrous oxide emission to be achieved as the input and predicts an amount of nitrogen as the output, the trained manure management model takes the transformed crop yield to be achieved, the transformed nitrous oxide emission to be achieved, the transformed CSEQ to be achieved as the input and predicts an amount of manure as the output, and the trained crop residue management model takes the transformed CSEQ to be achieved as the input and predicts an amount of crop residue as the output.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for recommending adaptive crop protocol without adversely impacting yield and emissions, in accordance with some embodiments of the present disclosure.
FIG. 2 is an exemplary block diagram illustrating modules of the system of FIG. 1, for recommending adaptive crop protocol without adversely impacting yield and emissions, in accordance with some embodiments of the present disclosure.
FIGS. 3A and 3B illustrate exemplary flow diagrams of a processor-implemented method for recommending adaptive crop protocol without adversely impacting yield and emissions, using the system of FIG. 1, in accordance with some embodiments of the present disclosure.
FIG. 4 is a flowchart showing the steps of a scenario bound estimation technique for determining a set of scenario bounds for each of the one or more user goals for a scenario selected by a user, in accordance with some embodiments of the present disclosure.
FIG. 5 is a flowchart showing the steps for recommending the adaptive crop protocol of the crop to be cultivated by the user, based on the plurality of transformed user goals, using a trained ensemble model and an agriculture operation sequencing technique, in accordance with some embodiments of the present disclosure.
FIG. 6 shows an exemplary block diagram of a crop protocol generation module, in accordance with some embodiments of the present disclosure.
FIG. 7 is a flowchart showing the steps for obtaining a trained Yield At Cost of Environment (YACE) index estimation model, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional techniques in crop protocol recommendation follow either conventional agro-practices or recommendations provided by agriculture institutions as package of practices (PoPs) for a given region. These conventional recommendations may not always take goals of the farmers into consideration and hence may not provide balance between the yield, water usage and the emissions.

The present disclosure solves the technical problems in the art by balancing the agriculture yield with environmental sustainability, ensuring that productivity does not come at the cost of environment while crop protocol recommendation. The present disclosure provides a way for farmers to align their current practices with optimal and balanced crop protocol without affecting their yield. The present disclosure also provides a tailored crop protocol (sometimes referred to as package of practices) and calibrations based on specific yield, water footprint and carbon footprint goals of the farmers.

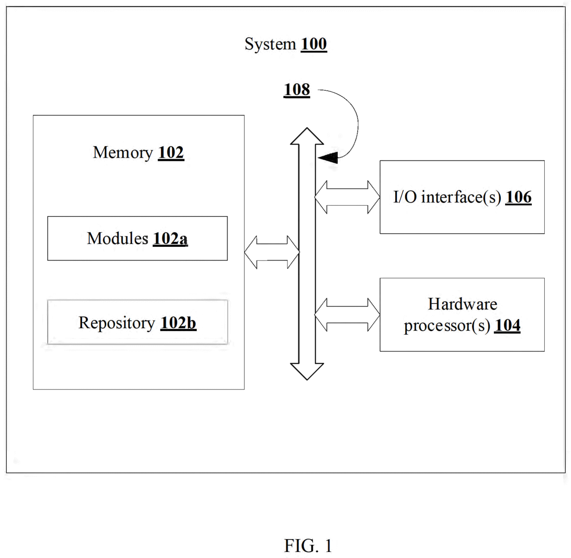

Referring now to the drawings, and more particularly to FIG. 1 through FIG. 7, where similar reference characters denote corresponding features consistently throughout the figures, there are shown preferred embodiments, and these embodiments are described in the context of the following exemplary systems and/or methods.

FIG. 1 is an exemplary block diagram of a system 100 for recommending adaptive crop protocol without adversely impacting yield and emissions, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

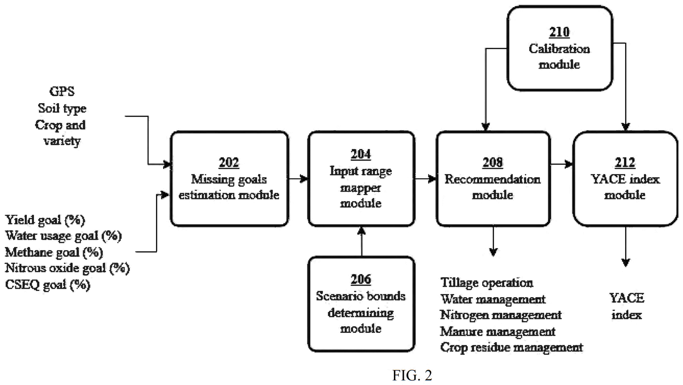

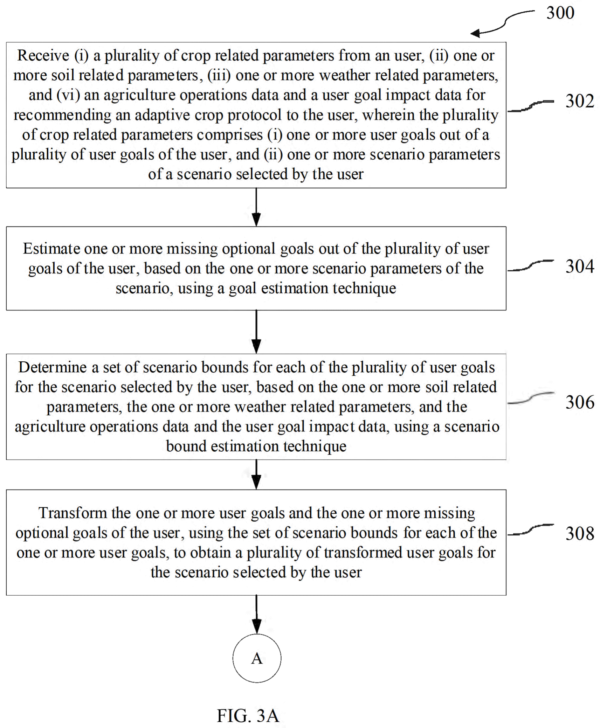

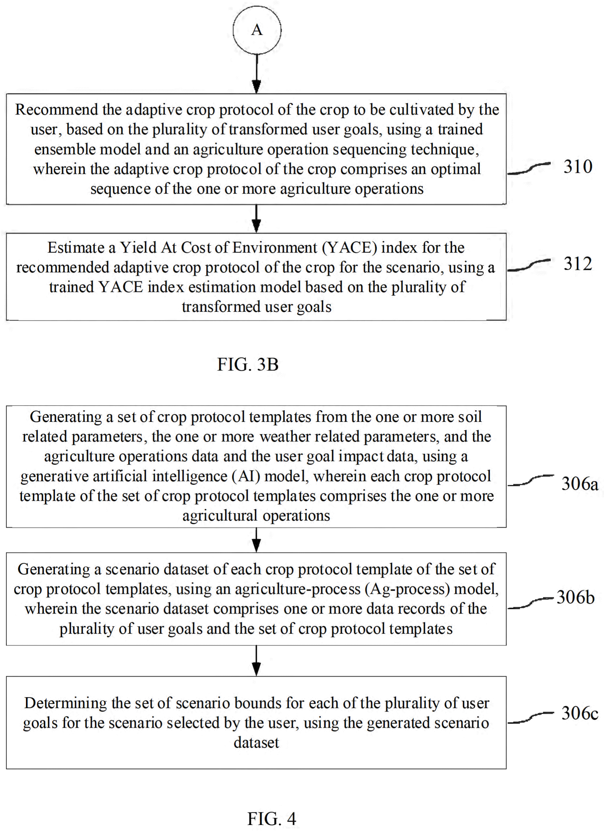

Referring collectively to FIG. 2 and FIGS. 3A and 3B, components and functionalities of the system 100 are described in accordance with an example embodiment of the present disclosure. For example, FIG. 2 is an exemplary block diagram illustrating the plurality of modules 102a of the system 100 of FIG. 1, for recommending adaptive crop protocol without adversely impacting yield and emissions, in accordance with some embodiments of the present disclosure. In an embodiment, the plurality of modules 102a include a missing goals estimation module 202, an input range mapper module 204, a scenario bounds determining module 206, a recommendation module 208, a calibration module 210, and a YACE index module 212.

For example, FIGS. 3A and 3B illustrate exemplary flow diagrams of a processor-implemented method 300 for recommending adaptive crop protocol without adversely impacting yield and emissions, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more input/output (I/O) interfaces 106 of the system 100 are configured to receive values of (i) each of a plurality of crop related parameters from a user, (ii) one or more soil related parameters, (iii) one or more weather related parameters, and (iv) an agriculture operations data and a user goal impact data for recommending an adaptive crop protocol to the user. The plurality of crop related parameters received from the user includes (i) one or more user goals out of a plurality of user goals of a user, and (ii) one or more scenario parameters of a scenario selected by the user.

The plurality of user goals is a list of goals that play a major role while recommending the adaptive crop protocol to the user. The plurality of user goals includes (i) a percentage of a crop yield potential to be achieved, (ii) a percentage of a water usage reduction to be achieved, (iii) a percentage of a methane emission reduction to be achieved, (iv) a percentage of a nitrous oxide emission reduction to be achieved, and (v) a percentage of a carbon sequestration (CSEQ) to be achieved.

The percentage of the crop yield potential to be achieved refers to a percentage of the yield to be achieved of a maximum yield potential for the given crop type and the crop variety. The percentage of the water usage reduction to be achieved refers to a percentage of a water usage threshold of a maximum water usage required for the given crop type and the crop variety. The percentage of the methane emission reduction to be achieved refers to a percentage of a methane emission threshold of a maximum methane emission from the given crop type and the crop variety.

The percentage of the nitrous oxide emission reduction to be achieved refers to a percentage of a nitrous oxide emission threshold of a maximum nitrous oxide emission from the given crop type and the crop variety. Similarly, the percentage of the CSEQ to be achieved refers to a percentage of a carbon sequestration (CSEQ) threshold of a maximum carbon sequestration (CSEQ) from the given crop type and the crop variety. The CSEQ is a process of capturing and storing atmospheric carbon dioxide. This is a technique of reducing the amount of carbon dioxide in the atmosphere with the goal of reducing global climate change.

At this first step, the values of the one or more user goals out of these plurality of user goals are received from the user. The percentage of a crop yield potential to be achieved is mandate of the one or more user goals as it is the main objective. The one or more user goals are the goals of the user based on which the adaptive crop protocol is to be recommended for that user. The percentage of a crop yield potential to be achieved is mandate of the one or more user goals as it is the main objective. For example, the one or more user goals of the user who is interested to get maximum yield while reducing some amounts of nitrous oxide emission include the percentage of the crop yield potential to be achieved, and the percentage of the methane emission reduction to be achieved. In another example, the one or more user goals of the user who is interested to get maximum yield while reducing some amounts of nitrous oxide and methane emission while consuming limited water usage include the percentage of the crop yield potential to be achieved, the percentage of the water usage reduction to be achieved, the percentage of the methane emission reduction to be achieved, and the percentage of the nitrous oxide emission reduction to be achieved. Thus, the crop protocol is to be recommended to the user, that is adaptive to the given crop type and the crop variety considering these one or more user goals as constraints.

The scenario selected by the user in the present disclosure refers to the data of soil type in the selected agriculture area (also referred to as region) in which the given crop type and the crop variety is to be cultivated. Since the soil type may vary between the geographic regions and likely crops can be cultivated may also vary to that specific geographic region based on the soil type, the crop protocol to be recommended is to be adaptive for the given scenario. In another words, the one or more user goals may vary from one scenario to another scenario. For example, most black soil agriculture areas are known to get good yield for crops such as cotton in warm weather conditions.

Thus, the scenario is defined with values of one or more scenario parameters which includes (i) a global positioning system (GPS) location data of the agriculture area where the crop is to be cultivated, (ii) the soil type of the agriculture area, and (iii) the crop type and the crop variety of the crop to be cultivated in that agriculture area. An exemplary scenario is defined as follows:
Region: Thanjavur, Crop: Rice, Variety: ADT 42 Rice.

In an embodiment, the GPS location data of the agriculture area is defined by a set of location coordinates such as a latitude and a longitude. The soil type is the type of soil present in the given agriculture area. The crop type is a type of crop such as wheat, maize, paddy, and so on. The crop variety is a variety of the crop among the number of crop varieties available for the given the crop type. For example, a list of available crop varieties of wheat is: DBW 110, HI 1500, HI 1531, HI 8627, PBW 596, and so on. These one or more scenario parameters are to be selected by the user so that the adaptive crop protocol can be recommended for the selected scenario.

The one or more soil related parameters are a list of parameters of the soil in the given agriculture area. In an embodiment, the one or more soil related parameters include but are not limited to soil texture, soil organic carbon, soil nitrogen, pH, and a bulk density. The one or more weather related parameters are a list of parameters of the daily weather and the environment of the given agriculture area for a time period during which the crop is to be cultivated.

In an embodiment, the one or more weather related parameters include but are not limited to daily minimum and maximum temperatures, precipitation, and relative humidity. The agriculture operations data and the user goal impact data refer to the agriculture operations which impact the one or more user goals. In an embodiment, the agriculture operations data and the user goal impact data include but are not limited to various types of tillage operations, nitrogen fertilizer applications, manure applications, water applications, crop residue handling operations, and respective correlation scores of the one or more user goals. In an embodiment, the one or more soil related parameters, the one or more weather related parameters, and the agriculture operations data and the user goal impact data are received from a database where the historical data of these parameters are stored.

In an embodiment, the user includes a farmer, an agriculture professional, or any human being who is desired for the adaptive crop protocol of the crop to be cultivated in the given agriculture region with the crop type and variety, based on the user goals.

At step 304 of the method 300, the one or more hardware processors 104 of the system 100 are configured to estimate one or more missing optional goals out of the plurality of user goals of the user. The one or more missing optional goals are some of the user goals out of the plurality of user goals, that are critical for the scenario selected by the user, however these are not provided by the user at step 302 of the method 300. For example, if the one or more user goals received at step 302 of the method 300 are the percentage of the crop yield potential to be achieved and the percentage of the water usage reduction to be achieved, then the one or more missing optional goals are the percentage of the methane emission reduction to be achieved, and the percentage of the CSEQ to be achieved. In accordance with the present disclosure, the missing goals estimation module 202 is configured to estimate the one or more missing optional goals out of the plurality of user goals of the user, that are critical for the scenario selected by the user.

The one or more missing optional goals are the optional goals for the user while the one or more user goals received at step 302 of the method 300 are mandated by the user to recommend the adaptive crop protocol. However, the methods and systems of the present disclosure consider both the one or more user goals and the one or more missing optional goals to recommend an optimal adaptive crop protocol. In an embodiment, the one or more missing optional goals are the goals that may not be present in the plurality of optional goals, which may be very specific to the scenario selected by the user. For example, minimizing the harvesting time, crop reproduction, and so on.

The one or more missing optional goals and their values are estimated/obtained based on the one or more scenario parameters of the scenario, using a goal estimation technique. The goal estimation technique employs a machine learning (ML) based goal estimation model to estimate the missing goals based on scenario parameters. This goal estimation model takes input soil parameters, crop type, and weather conditions and outputs optional user goals. In accordance with the present disclosure, the scenario bounds determining module 206 is configured to determine the set of scenario bounds of each of the one or more missing optional goals.

At step 306 of the method 300, the one or more hardware processors 104 of the system 100 are configured to determine a set of scenario bounds for each of the plurality of user goals for the scenario selected by the user at step 302 of the method 300. The set of scenario bounds indicates a maximum bound and a minimum bound for each of the plurality of user goals for the selected scenario. For example, the maximum bound and the minimum bound of the percentage of the crop yield potential to be achieved include the maximum yield that can be achievable and the minimum yield that can be achievable given the crop type and the crop variety for the scenario selected by the user.

The set of scenario bounds for each user goal of the plurality of user goals are determined for the scenario, based on the one or more soil related parameters, the one or more weather related parameters, and the agriculture operations data and the user goal impact data received at step 302 of the method 300. Further, the set of scenario bounds for each of the one or more agriculture operations are also determined for the scenario, based on the one or more soil related parameters, the one or more weather related parameters, and the agriculture operations data and the user goal impact data received at step 302 of the method 300. A scenario bound estimation technique is employed to determine the set of scenario bounds for each user goal and each agriculture operation.

In accordance with the present disclosure, the scenario bounds determining module 206 is configured to determine the set of scenario bounds of each of the one or more user goals. The set of scenario bounds for each of the plurality of user goals and the one or more agriculture operations are defined as follows: $Yield = \left[{Yield}_{max _ bound}, {Yield}_{min _ bound}\right]$ $Water usage \left(WU\right) = \left[{WU}_{max _ bound}, {WU}_{min _ bound}\right]$ ${CH}_{4} _ emission = \left[{CH}_{4}_{emission}_{max _ bound},{CH}_{4}_{emission}_{min _ bound}\right]$ ${N}_{2} O _ emission = \left[{N}_{2}O_{emission}_{max _ bound},{N}_{2}O_{emission}_{min _ bound}\right]$ $CSEQ = \left[{CSEQ}_{max _ bound}, {CSEQ}_{min _ bound}\right]$ $Tillage operation = \left[{T}_{max}, {T}_{min}\right]$ $Water management = \left[{W}_{max}, {W}_{min}\right]$ $Nitrogen management = \left[{N}_{max}, {N}_{min}\right]$ $Manure management = \left[{M}_{max}, {M}_{min}\right]$ $Crop residue management = \left[{R}_{max}, {R}_{min}\right]$

FIG. 4 is a flowchart showing the steps of the scenario bound estimation technique for determining the set of scenario bounds for each of the one or more user goals for the scenario selected by the user, in accordance with some embodiments of the present disclosure. As shown in FIG. 4, the scenario bound estimation technique for determining the set of scenario bounds for each of the plurality of user goals is explained through steps 306a to 306c.

At step 306a, a set of crop protocol templates are generated from the one or more soil related parameters, the one or more weather related parameters, and the agriculture operations data and the user goal impact data, using a generative artificial intelligence (AI) model. The generative artificial intelligence (AI) model such as a Bidirectional encoder representations from transformers (BERT) language model is utilized with a predefined prompt to generate the set of crop protocol templates.

In accordance with the present disclosure, a crop protocol template generation module (not shown in FIG. 2) of the scenario bounds determining module 206 is configured to generate the set of crop protocol templates from the one or more soil related parameters, the one or more weather related parameters, and the agriculture operations data and the user goal impact data, using the generative artificial intelligence (AI) model.

Each crop protocol template of the set of crop protocol templates includes one or more agriculture operations. The one or more agriculture operations are the list of operations to be performed in agriculture from land preparation till getting the yield. The one or more agriculture operations to be performed include but are not limited to: (i) a tillage operation, (ii) a water management, (iii) a nitrogen management, (iv) a manure management, and (v) a crop residue management. The tillage operation refers to preparation manipulation of the soil/land into a desired condition before planting and the cultivation of the crop. The tillage operation may lead to a decrease in the CSEQ. The tillage operation in general is performed by various mechanical tools based on the type of tillage operations. Some of the types of tillage operations based on an amount of tillage include deep tillage, shallow tillage, and no tillage. Some of the types of tillage operations based on purpose include but are not limited to digging, stirring, pulverization, and overturning.

The water management is the control and movement of water resources for cultivating the crop through various water management practices which are needed to maintain optimal usage and maximize the yield. Some of the water management practices include but are not limited to drip irrigation, furrow irrigation, continuous flood (CF), alternate wetting and drying (AWD). The nitrogen management refers to additional supply of nitrogen (for example, nitrogen fertilizers in the form of urea, ammonia with various quantities) to croplands is critical to sustain soil fertility, plant growth, and crop production. Nitrogen is primarily absorbed through fine roots, however, is leaky, which converts into inorganic forms that can be lost from agriculture fields and cause environmental problems such as nitrous oxide emission.

The manure management refers to additional supply of plant and animal wastes as sources of plant nutrients. They release nutrients after their decomposition. However, the additional supply of manure may lead to soil damage and cause environmental problems. Further, the manure operations may lead to an increase in the CSEQ. Some of the manure operations include but are not limited to farmyard manure and vermicompost with various quantities.

The crop residue management refers to managing the amount, orientation and distribution of crop and other plant residue on the soil surface throughout the year. It includes all soil disturbing activities like tillage, nutrient applications and harvesting of residue. The crop residue handling operations include but are not limited to various percentages of crop residue incorporated in the soil (for example, 60%, 70%, and so on).

At step 306b, a scenario dataset of each crop protocol template of the set of crop protocol templates, is generated using an agriculture-process (Ag-process) model. The scenario dataset comprises one or more data records of the one or more user goals and the set of crop protocol templates generated at step 306a. The Ag-process model is a bio-geo-chemical method used for simulating crop growth, soil temperature and moisture regimes, soil carbon dynamics, nitrogen leaching, and greenhouse gas emissions. The Ag-process model is configured based on the soil parameters, the crop parameters, the daily weather data and the crop protocol templates. Based on the configuration, the Ag-process model simulates and estimates values of each of the plurality of user goals for that crop protocol template. This is iteratively done for all the crop protocol templates that are generated.

In accordance with the present disclosure, a scenario dataset generation module (not shown in FIG. 2) of the scenario bounds determining module 206 is configured to generate the scenario dataset of each crop protocol template of the set of crop protocol templates, using the Ag-process model.

Table 1 shows an exemplary scenario dataset of each crop protocol template.

**Table 1**

| Yield kg/ha | CSEQ | N2O | CH4 | Water usage | Tillage | Water | Res idue | Nitrogen | Manure |
|---|---|---|---|---|---|---|---|---|---|
| 1046 2.5 | 658 | 2.9 | 26 | 8580 | 2 slightly plough (5cm) | AWD | 30 | 250 | 0 |
| 1033 7.5 | 1439 | 1.5 | 188 | 1430 0 | 2 slightly plough (5cm) | CF | 30 | 50 | 2000 |
| 10050 | 2115 | 5.4 | 287 | 1430 0 | 2 deep plough (30cm) | CF | 100 | 250 | 0 |
| 10050 | 2238 | 6 | 51 | 8580 | 2 deep plough (30cm) | AWD | 100 | 250 | 0 |
| 1001 2.5 | 471 | 0.6 | 20 | 8580 | 2 slightly plough (5cm) | AWD | 10 | 100 | 600 |
| 9906.25 | 1032 | 0.7 | 49 | 8580 | 2 deep plough (30cm) | AWD | 60 | 100 | 0 |

At step 306c, the set of scenario bounds for each of the plurality of user goals for the scenario selected by the user, are determined using the generated scenario dataset at step 306b. More specifically, the maximum bound (value) and the minimum bound (value) from the one or more data records of the one or more user goals present in the generated scenario dataset are captured as the set of scenario bounds for each of the plurality of user goals for the scenario selected by the user.

At step 308 of the method 300, the one or more hardware processors 104 of the system 100 are configured to transform the one or more user goals received at step 302 of the method 300 and the one or more missing optional goals of the user estimated at step 304 of the method 300, to obtain a plurality of transformed user goals for the scenario selected by the user. The set of scenario bounds determined at step 306 of the method 300 for each of the one or more user goals are used to transform the one or more user goals and the one or more missing optional goals into the plurality of transformed user goals for the scenario selected by the user.

In accordance with the present disclosure, the input range mapper module 204 is configured to transform the one or more user goals and the one or more missing optional goals, to obtain the plurality of transformed user goals for the scenario selected by the user using the set of scenario bounds of each of the plurality of user goals.

Thus, the plurality of transformed user goals includes (i) a transformed crop yield to be achieved, (ii) a transformed water usage to be achieved, (iii) a transformed methane emission to be achieved, (iv) a nitrous oxide emission to be achieved, and (v) a transformed CSEQ to be achieved.

In an embodiment, the plurality of transformed user goals for the scenario is obtained based on respective maximum bounds using below equations: ${Yield}^{T} = {Yield}_{max_ bound} \times \left(Yield/100\right)$ ${WU}^{T} = {WU}_{max_ bound} \times \left(WU/100\right)$ ${CH}_{4} _ {emission}^{T} = {CH}_{4} _ {emission}_{max_ bound} \times \left({CH}_{4}_emission/100\right)$ ${N}_{2} O _ {emission}^{T} = {N}_{2} O _ {emission}_{max_ bound} \times \left({N}_{2}O_emission/100\right)$ ${CSEQ}^{T} = {CSEQ}_{max_ bound} \times \left(CSEQ/100\right)$ Wherein,
*Yield_{max_bound}* is the maximum bound of the yield for the given scenario,
*W*U_{max*_bound*} is the maximum bound of the water usage for given scenario,
*CH*₄*_{_}emission_{max_bound}* is the maximum bound of the methane emissions for given scenario,
*N*₂*O_emission_{max_bound}* is the maximum bound of the nitrous oxide emissions for given scenario,
*CSEQ_{max_bound}* is the maximum bound of the carbon sequestration for the given scenario.
*Yield* is the yield goal which is defined as the percentage of a crop yield potential to be achieved of the maximum for the given crop variety,
*WU* is the water usage goal which is defined as the percentage of the water usage reduction to be achieved of the maximum,
*CH₄_emission* is the methane emissions goal which is defined as the percentage of the methane emission reduction to be achieved of the maximum, *N*₂*O_emission* is the nitrous oxide emissions goal which is defined as the percentage of the nitrous oxide emission reduction to be achieved of the maximum,
*CSEQ* is the carbon sequestration goal which is defined as the percentage of the CSEQ to be achieved of the maximum,
*Yield^{T}* is the transformed crop yield to be achieved for the given scenario,
*WU^{T}* is the transformed water usage to be achieved for the given scenario,
*CH₄_emission^{T}* is the transformed methane emission to be achieved for the given scenario,
*N*₂*O_emission^{T}* is the transformed nitrous oxide emission to be achieved for the given scenario, and
*CSEQ^{T}* is the transformed CSEQ to be achieved for the given scenario.

At step 310 of the method 300, the one or more hardware processors 104 of the system 100 are configured to recommend the adaptive crop protocol of the crop to be cultivated by the user, based on the plurality of transformed user goals obtained at step 308 of the method 300, using a trained ensemble model and an agriculture operation sequencing technique. The agriculture operation sequencing technique determines the sequence of the agriculture operations to be performed and then the trained ensemble model is utilized to determine the adaptive crop protocol. The adaptive crop protocol of the crop includes an optimal sequence of the one or more agriculture operations.

In accordance with the present disclosure, the recommendation module 208 is configured to recommend the adaptive crop protocol of the crop to be cultivated by the user, based on the plurality of transformed user goals, using the trained ensemble model and the agriculture operation sequencing technique.

The trained ensemble model is a combination of one or more of: (i) a trained tillage management model, (ii) a trained water management model, (iii) a trained nitrogen management model, (iv) a trained manure management model, and (v) a trained crop residue management model. The combination of the trained tillage management model, the trained water management model, the trained nitrogen management model, the trained manure management model, and the trained crop residue management model is made based on the one or more agriculture operations to be performed and their sequence, to form the trained ensemble model. For example, if the one or more agriculture operations to be performed are the tillage operation and the water management, then the trained ensemble model is formed with the trained tillage management model and the trained water management model. In another example, if the one or more agriculture operations to be performed are the tillage operation, the nitrogen management, and the manure management, then the trained ensemble model is formed with the trained tillage management model, the trained nitrogen management model, and the trained manure management model, and so on.

In an embodiment, the trained tillage management model is generated by training a machine learning (ML)-based classification model such as Support Vector Machine (SVM), Random Forest (RF) classifier, and so on, with a tillage training data. The tillage training data includes the methane emission to be achieved, the nitrous oxide emission to be achieved, and the CSEQ to be achieved as input variables, and a labelled type of tillage operation as an output variable.

The trained water management model is generated by training the ML-based classification model such as Support Vector Machine (SVM), Random Forest (RF) classifier, and so on, with a water training data. The water training data includes the crop yield to be achieved, the water usage to be achieved, the methane emission to be achieved, and the CSEQ to be achieved as the as input variables, and a labelled type of water operation as the output variable.

The trained nitrogen management model is generated by training a ML-based regression model such as Linear regressor, Random Forest (RF) regressor, and so on, with a nitrogen training data. The nitrogen training data includes the crop yield to be achieved, and the nitrous oxide emission to be achieved as the input variables, and a labelled amount of nitrogen as the output variable.

The trained manure management model is generated by training the ML-based regression model such as Linear regressor, Random Forest (RF) regressor, and so on, with a manure training data. The manure training data includes the crop yield to be achieved, the nitrous oxide emission to be achieved, the CSEQ to be achieved as the input variables, and a labelled amount of manure as the output variable.

The trained crop residue management model is generated by training the ML-based regression model such as Linear regressor, Random Forest (RF) regressor, and so on, with a crop residue training data. The crop residue training data includes the CSEQ to be achieved as the input variable, and a labelled amount of crop residue as the output variable.

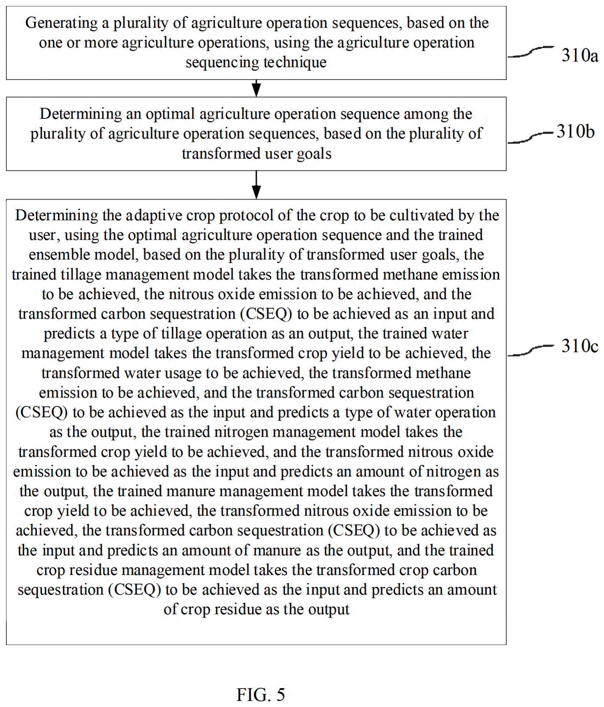

FIG. 5 is a flowchart showing the steps for recommending the adaptive crop protocol of the crop to be cultivated by the user, based on the plurality of transformed user goals, using a trained ensemble model and an agriculture operation sequencing technique, in accordance with some embodiments of the present disclosure. As shown in FIG. 5, recommending the adaptive crop protocol of the crop is explained through steps 310a to 310c.

At step 310a, a plurality of agriculture operation sequences is generated based on the one or more agriculture operations, using the agriculture operation sequencing technique. The plurality of agriculture operation sequences includes various combinations consisting of the one or more agriculture operations in a meaningful sequence. Thus, each agriculture operation sequence is a sequence of the one or more agriculture operations.

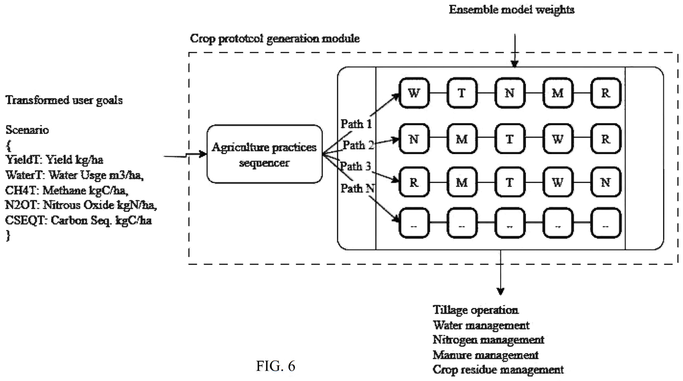

In accordance with the present disclosure, a crop protocol generation module (not shown in FIG. 2) of the recommendation module 208 is configured to generate the plurality of agriculture operation sequences based on the one or more agriculture operations, using an agriculture practices sequencer (not shown in FIG. 2) which employs the agriculture operation sequencing technique. FIG. 6 shows an exemplary block diagram of a crop protocol generation module, in accordance with some embodiments of the present disclosure.

The crop protocol generation module (not shown in FIG. 2) of the recommendation module 208 generate the plurality of agriculture operation sequences using the trained tillage management model, the trained water management model, the trained nitrogen management model, the trained manure management model, and the trained crop residue management model of the trained ensemble model. The agriculture practices sequencer (not shown in FIG. 2) controls execution of these trained models (the trained tillage management model, the trained water management model, the trained nitrogen management model, the trained manure management model, and the trained crop residue management model) on specific paths. The agriculture practices sequencer (not shown in FIG. 2) invokes a particular path where these trained models are executed in certain sequence of this path based on their impact on the plurality of transformed user goals.

At step 310b, an optimal agriculture operation sequence is determined among the plurality of agriculture operation sequences, based on the plurality of transformed user goals. The plurality of transformed user goals helps in determining the optimal agriculture operation sequence among the plurality of agriculture operation sequences. The agriculture operation sequence is said to be optimal when the trained ensemble model is able to derive the agriculture operations through the trained tillage management model, the trained water management model, the trained nitrogen management model, the trained manure management model, and the trained crop residue management model, are ideal based in their impact on the plurality of transformed user goals.

At step 310c, the adaptive crop protocol of the crop is determined using the optimal agriculture operation sequence and the trained ensemble model, based on the plurality of transformed user goals. The trained tillage management model of the trained ensemble model takes the transformed methane emission to be achieved, the nitrous oxide emission to be achieved, and the transformed CSEQ to be achieved as an input and predicts a type of tillage operation as an output. The trained water management model of the trained ensemble model takes the transformed crop yield to be achieved, the transformed water usage to be achieved, the transformed methane emission to be achieved, and the transformed CSEQ to be achieved as the input and predicts a type of water operation as the output.

The trained nitrogen management model of the trained ensemble model takes the transformed crop yield to be achieved, and the transformed nitrous oxide emission to be achieved as the input and predicts an amount of nitrogen as the output. The trained manure management model of the trained ensemble model takes the transformed crop yield to be achieved, the transformed nitrous oxide emission to be achieved, the transformed CSEQ to be achieved as the input and predicts an amount of manure as the output. The trained crop residue management model of the trained ensemble model takes the transformed CSEQ to be achieved as the input and predicts an amount of crop residue as the output. The weights of the trained ensemble model are stored in the repository for each scenario corresponding to the user goals.

In accordance with the present disclosure, the calibration module 210 is configured to calibrate the weights of the trained ensemble model while recommending the adaptive crop protocol of the crop, when the weights of the trained ensemble model are not available in the repository. The calibration module 210 make use of the set of bounds of each user goal and each agriculture operation while calibrates the weights of the trained ensemble model.

The crop protocol generation module (not shown in FIG. 2) of the recommendation module 208 fetches the weights of the trained ensemble model for the given scenario if they are available in the repository. Based on the user goals provided by the user at step 302 of the method 300, the agriculture practices sequencer (not shown in FIG. 2) determines and executes an sub-module execution path on which various sub-modules (tillage module (the trained tillage management model (T)), water module (the trained water management model (W)), nitrogen module (the trained nitrogen management model (N)), manure module (the trained manure management model (M)), and crop residue module (the trained crop residue management model (R)) (not shown in FIG. 2) of trained ensemble module (the trained ensemble model) are executed in certain order. FIG. 6 shows an exemplary block diagram of a crop protocol generation module, in accordance with some embodiments of the present disclosure.

If the user is provided with multiple user goals including the water usage, the methane emission reduction, the nitrogen emission reduction, and the CSEQ along with yield at step 302 of the method 300, then the water usage/ the methane emission reduction goal is given highest priority followed by the nitrogen emission reduction goal, and lastly the CSEQ goal. So, the sub-modules which impact high priority user goals (inputs) are executed first and sub-module execution function ensure that by selecting and appropriate module execution path as given below. New paths can also be added based on need or any addition of a new user goal parameter.

Case 1: If user has provided only the water usage or methane emission reduction goal as goals along with the yield, the sub-module function executes below path where models are executed in:
water module → tillage module → nitrogen module → manure module → crop residue module
As the water usage/ methane emission reduction has highest impact on the water module (estimates type of irrigation) it is executed first, next the methane emission reduction has more impact on tillage module (estimates tillage type) the followed by remaining modules. Once the water module is executed using transformed user goals and its output is generated. Then, along with the transformed user goals, the output of the water module is passed to the next module i.e., tillage module which then generates its output. Similarly output of both the water and tillage module are passed to next module i.e., nitrogen module, and so on.

Case 2: if user provided only nitrous oxide emission reduction goal along with the yield, then sub-module execution function invokes below path.
nitrogen module → manure module → tillage module → water module → crop residue module
Here, the nitrous oxide emission reduction goal has highest impact on the nitrogen module (estimates amount of nitrogen application) followed by the manure, tillage, water and crop residue modules, where the crop residue module has least impact on nitrous oxide emission reduction goal.

Case 3: if the user provides the CSEQ along with the yield then below path is invoked:
crop residue module → manure module → tillage module → water module → nitrogen module

Case 4: if the user provided with the water usage/ methane emission reduction, and CSEQ goals, then the following path will be executed:
water module → crop residue module → manure module → tillage module → nitrogen module

Case 5: if the user provided the water usage/ methane emission reduction, and the nitrous oxide emission reduction as goals, then the path same as Case 1 is invoked.

At step 312 of the method 300, the one or more hardware processors 104 of the system 100 are configured to estimate a Yield At Cost of Environment (YACE) index for the recommended adaptive crop protocol of the crop obtained at step 310 of the method 300 for the given scenario. A trained YACE index estimation model is employed to estimate the YACE index for the recommended adaptive crop protocol based on the one or more transformed user goals.

The present disclosure recommends the adaptive crop protocol that is oriented towards better sustainability so that it minimizes the impact on environment while not affecting the yield. The YACE index gives the environment friendliness measure of the proposed practices is also generated to help the farmer and other stakeholders. The YACE index is used to determine the environment sustainability of the adaptive crop protocol recommended at step 310 of the method 300 for the farmers to decide before implementing the recommended adaptive crop protocol into implementation of cultivating the crop type and variety in the given agriculture region.

In accordance with the present disclosure, the YACE index module 212 is configured to estimate the YACE index for the recommended adaptive crop protocol of the crop for the given scenario. The YACE index module 212 assess the proximity of recommended practices with respect to a most optimal crop protocol (best solution) and a least optimal crop protocol (worst solution) in the scenario dataset and computes an index that indicates the environment friendliness of the recommended crop protocol.

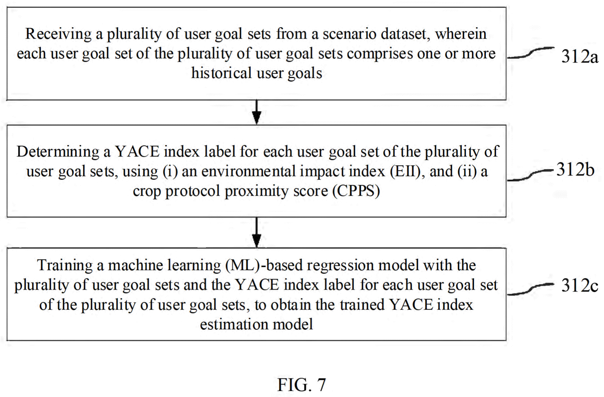

FIG. 7 is a flowchart showing the steps for obtaining a trained Yield At Cost of Environment (YACE) index estimation model, in accordance with some embodiments of the present disclosure. As shown in FIG. 7, obtaining the trained YACE index estimation model is explained through steps 312a to 312c. At step 312a, a plurality of user goal sets is received from a scenario dataset obtained at step 306b. Each user goal set of the plurality of user goal sets include one or more historical user goals. The one or more historical user goals are the plurality of user goals that were received in the past from various users.

At step 312b, a YACE index label is determined for each user goal set of the plurality of user goal sets received at step 312a. The YACE index label for each user goal set is determined using (i) an environmental impact index (EII), and (ii) a crop protocol proximity score (CPPS). The environmental impact index (EII) defines the impact on the environment from the recommended adaptive crop protocol. The crop protocol proximity score (CPPS) represents the relative distance of the recommended practices from most optimal and least optimal practices with respect to the transformed crop yield to be achieved (*Yield^{T}*)*,* the transformed water usage to be achieved (*WU^{T}*), the transformed methane emission to be achieved (*CH₄_emission^{T}*), the transformed nitrous oxide emission to be achieved (*N₂O_emission^{T}*)*,* the transformed CSEQ to be achieved (*CSEQ^{T}*).

In accordance with the present disclosure, a YACE dataset generation module (not shown in FIG. 2) of the YACE index module 212 is configured to determine the environmental impact index (EII), the crop protocol proximity score (CPPS), and the YACE index label. In an embodiment, the environmental impact index (EII) is determined based on the transformed water usage to be achieved (*WU^{T}*), the transformed methane emission to be achieved (*CH₄_emission^{T}*), the transformed nitrous oxide emission to be achieved (*N*₂*O_emission^{T}*), and the transformed CSEQ to be achieved (*CSEQ^{T}*).

In an embodiment, the one or more crop protocol parameters of the most and least balanced crop protocol are fetched for the given scenario from the scenario dataset. The one or more crop protocol parameters from the most balanced crop protocol include: yield from most balanced crop protocol (*M_{Yield}*), water usage from most balanced crop protocol (*M_{WU}*)*,* methane emissions from most balanced crop protocol (*M_{CH₄}_ₑₘᵢₛₛᵢₒₙ),* nitrous oxide emissions from most balanced crop protocol (*M*_{*N*₂*O_emission*}), and the CSEQ from most balanced crop protocol (*M_{CSEQ}*). Similarly, the one or more crop protocol parameters from the least balanced crop protocol include: yield from least balanced crop protocol (*L_{Yield}*), water usage from least balanced crop protocol (*L_{WU}*), methane emissions from least balanced crop protocol (*L_{CH₄_emission}*), nitrous oxide emissions from least balanced crop protocol (*L*_{*N*₂*O_emission*}), and CSEQ from least balanced crop protocol (*L_{CSEQ}*).

The environmental impact index (EII) is determined by dynamically defining the impact weights for the user goals, using below equation: $\begin{matrix}{EII}_{\left[i\right]} = \left({W}_{\left[{CH}_{4}_emission\right]}\times {CH}_{4}_{emission}_{\left[i\right]}\right) \\ - \left({W}_{\left[{N}_{2}O_emission\right]}\times {N}_{2}O_{emission}_{\left[i\right]}\right) \\ - \left({W}_{\left[CSEQ\right]}\times {CSEQ}_{\left[i\right]}\right) - \left({W}_{\left[WU\right]}\times {WU}_{\left[i\right]}\right)\end{matrix}$ Where, *CH*₄_*emission*_{[*i*]} represents the methane emission for *i^{th}* crop protocol template in the scenario dataset, *N*₂*O_emission*_{[*i*]} represents the nitrous oxide emission for *i^{th}* crop protocol template in the scenario dataset, *CSEQ*_{[*i*]} represents the CSEQ for *i^{th}* crop protocol template in the scenario dataset, *WU*_{[*i*]} represents the water usage for *i^{th}* crop protocol template in the scenario dataset. Further, *W*_{[*CH*₄}*_ₑₘᵢₛₛᵢₒₙ*] represents the weight for the methane emission, *W*_{[*N*₂*O_emission*]} represents the weight for the nitrous oxide emission, *W*_{[*CSEQ*]} represents the weight for the CSEQ, *W*_{[*WU*]} represents the weight for the water usage.

Next, the crop protocol proximity score (CPPS) is determined based on the relative distance of the farmer's protocols from the most and the least balanced protocols with respect to the user goals for each crop protocol template. For example, the crop protocol proximity score (*CPPS*_{[*i*]}) for *i^{th}* crop protocol template in the scenario dataset using below equation: ${CPPS}_{\left[i\right]} = {DLB}_{\left[i\right]} / \left({DMB}_{\left[i\right]}+{DLB}_{\left[i\right]}\right)$ ${DMB}_{\left[i\right]} = square root of \left(\begin{matrix}{\left({WU}_{\left[i\right]}-{M}_{WU}\right)}^{2} + {\left({CH}_{{4}_{{emission}_{\left[i\right]}}}-{M}_{{CH}_{{4}_{emission}}}\right)}^{2} \\ + {\left({M}_{{N}_{2} {O}_{{emission}_{\left[i\right]}}}-{M}_{{M}_{{N}_{2} {O}_{emission}}}\right)}^{2} + {\left({CSEQ}_{\left[i\right]}-{M}_{CSEQ}\right)}^{2}\end{matrix}\right)$ ${DLB}_{\left[i\right]} = square root of \left(\begin{matrix}{\left({WU}_{\left[i\right]}-{L}_{WU}\right)}^{2} + {\left({CH}_{{4}_{{emission}_{\left[i\right]}}}-{L}_{{CH}_{{4}_{emission}}}\right)}^{2} \\ + {\left({M}_{{N}_{2} {O}_{{emission}_{\left[i\right]}}}-{L}_{{M}_{{N}_{2} {O}_{emission}}}\right)}^{2} + {\left({CSEQ}_{\left[i\right]}-{L}_{CSEQ}\right)}^{2}\end{matrix}\right)$ Wherein *DMB*_{[*i*]} and *DLB*_{[*i*]} are the distances from the most balanced protocol and the least balanced protocol for *i^{th}* crop protocol template in the scenario dataset.

Finally, the YACE index (*YACEI*_{[*i*]}) is calculated for *i^{th}* crop protocol template in the scenario dataset, using below equation: ${YACEI}_{\left[i\right]} = \left({W}_{Y}\times {CPPS}_{\left[i\right]}\times \left({Yield}_{\left[i\right]}\right)-{W}_{E}\times \left(1-{CPPS}_{\left[i\right]}\right)\times {EII}_{\left[i\right]}\right.$ Wherein *W_{Y}* and *W_{E}* are the weights assigned to the yield and the environment respectively, and (*Yield*_{[*i*]} is the yield for *i^{th}* crop protocol template in the scenario dataset.

At step 312c, a machine learning (ML)-based regression model such as Linear regressor, Random Forest (RF) regressor, and so on is trained with the plurality of user goal sets received at step 312a and the YACE index label for each user goal set determined at step 312b, to obtain the trained YACE index estimation model.

The YACE index module 212 synthesizes the normalized yield, the Environmental Impact Index (EII), and the crop protocol proximity score (CPPS), to dynamically adjust the YACE Index. The YACE index balances the emphasis between achieving high crop yields and minimizing environmental impacts. The yield component is emphasized more as the CPPS nears the balanced practices. The environmental component is penalized more as CPPS deviates. Weights for both yield and environmental components are provided to allow flexibility to adjust the relative importance of yield and environmental impact. Finally once YACE Index is calculated for all the crop protocol templates in the scenario dataset, a new dataset is created with respective templates and corresponding calculated YACE index for the given scenario and stored in the repository for future use.

The methods and systems of the present disclosure recommend the adaptive crop protocols (right PoPs) as per water and carbon footprint goals of farmers while not affecting the crop yield. Further, the methods and systems of the present disclosure assess the adaptive crop protocols followed by farmers for their impact on yield, water footprint and carbon footprint and provide recommendations or calibrations to the practices based on assessed impact.

The recommendation module 208 encapsulates an ensemble architecture of models where farmer's goals (in terms of yield, water usage, methane emissions, nitrous oxide emissions and carbon stock.) are transformed into a crop protocol that they can follow in order to balance their yield and environmental impact. The calibration module 210 intelligently generates a scenario dataset based on impact of various agriculture operations such as tillage, water management, nitrogen management, manure management and crop residue management on yield, methane emissions, nitrous oxide emissions and carbon stock. Further, the calibration module 210 calibrates and optimizes the model parameters of the trained ensemble model using generated scenario dataset, which further transforms the user goals into the adaptive crop protocol. The YACE index module 212 gives the environmental friendliness measure of the recommended adaptive crop protocols and practices to help the farmer and other stakeholders.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of balancing good agriculture yield with environmental sustainability, ensuring that productivity does not come at the cost of environment. The methods and systems of the present disclosure provide a way for farmers to align their current practices with optimal and balanced crop protocol without affecting their yield. Further, the methods and systems of the present disclosure provide a tailored crop protocol (sometimes referred as package of practices) and calibrations based on specific yield, water footprint and carbon footprint goals of the farmers.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
receiving, via one or more input/output (I/O) interfaces, (i) a plurality of crop related parameters from a user, (ii) one or more soil related parameters, (iii) one or more weather related parameters, and (vi) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user (302);
estimating, via one or more hardware processors, one or more missing optional goals out of the plurality of user goals of the user, based on the one or more scenario parameters of the scenario, using a goal estimation technique (304);
determining, via the one or more hardware processors, a set of scenario bounds for each of the plurality of user goals for the scenario selected by the user, based on the one or more soil related parameters, the one or more weather related parameters, and the agriculture operations data and the user goal impact data, using a scenario bound estimation technique (306);
transforming, via the one or more hardware processors, the one or more user goals and the one or more missing optional goals of the user, using the set of scenario bounds for each of the one or more user goals, to obtain a plurality of transformed user goals for the scenario selected by the user (308); and
recommending, via the one or more hardware processors, the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations (310).

2. The processor-implemented method (300) as claimed in claim 1, further comprising:
estimating, via the one or more hardware processors, a Yield At Cost of Environment (YACE) index for the recommended adaptive crop protocol of the crop for the scenario, using a trained YACE index estimation model based on the plurality of transformed user goals (312).

3. The processor-implemented method (300) as claimed in claim 2, wherein the trained YACE index estimation model is generated by:
receiving a plurality of user goal sets from a scenario dataset, wherein each user goal set of the plurality of user goal sets comprises one or more historical user goals (312a);
determining a YACE index label for each user goal set of the plurality of user goal sets, using (i) an environmental impact index (EII), and (ii) a crop protocol proximity score (CPPS) (312b); and
training a machine learning (ML)-based regression model with the plurality of user goal sets and the YACE index label for each user goal set of the plurality of user goal sets, to obtain the trained YACE index estimation model (312c).

4. The processor-implemented method (300) as claimed in claim 1, wherein:
the plurality of user goals of the user are the one or more user goals and the one or more missing optional goals, and comprises (i) a percentage of a crop yield potential to be achieved, (ii) a percentage of a water usage reduction to be achieved, (iii) a percentage of a methane emission reduction to be achieved, (iv) a percentage of a nitrous oxide emission reduction to be achieved, and (v) a percentage of a carbon sequestration (CSEQ) to be achieved,
the one or more scenario parameters of the scenario selected by the user comprises (i) a global positioning system (GPS) location data of an agriculture area where the crop is to be cultivated, (ii) a soil type of the agriculture area, and (iii) a crop type and a crop variety of the crop to be cultivated,
the plurality of transformed user goals comprises (i) a transformed crop yield to be achieved, (ii) a transformed water usage to be achieved, (iii) a transformed methane emission to be achieved, (iv) a nitrous oxide emission to be achieved, and (v) a transformed CSEQ to be achieved,
the one or more agriculture operations to be performed comprises (i) a tillage operation, (ii) a water management, (iii) a nitrogen management, (iv) a manure management, and (v) a crop residue management, and
the set of scenario bounds for each of the one or more user goals comprises (i) a minimum bound, and (ii) a maximum bound.

5. The processor-implemented method (300) as claimed in claim 1, wherein determining the set of scenario bounds for each of the plurality of user goals for the scenario selected by the user, based on the one or more soil related parameters, the one or more weather related parameters, and the agriculture operations data and the user goal impact data, using a scenario bound estimation technique, comprises:
generating a set of crop protocol templates from the one or more soil related parameters, the one or more weather related parameters, and the agriculture operations data and the user goal impact data, using a generative artificial intelligence (AI) model, wherein each crop protocol template of the set of crop protocol templates comprises the one or more agriculture operations (306a);
generating a scenario dataset of each crop protocol template of the set of crop protocol templates, using an agriculture-process (Ag-process) model, wherein the scenario dataset comprises one or more data records of the plurality of user goals and the set of crop protocol templates (306b); and
determining the set of scenario bounds for each of the plurality of user goals for the scenario selected by the user, using the generated scenario dataset (306c).

6. The processor-implemented method (300) as claimed in claim 1, wherein the trained ensemble model is a combination of one or more of: (i) a trained tillage management model, (ii) a trained water management model, (iii) a trained nitrogen management model, (iv) a trained manure management model, and (v) a trained crop residue management model, and wherein:
the trained tillage management model is generated by training a machine learning (ML)-based classification model with a tillage training data,
the trained water management model is generated by training the ML-based classification model with a water training data,
the trained nitrogen management model is generated by training a ML-based regression model with a nitrogen training data,
the trained manure management model is generated by training the ML-based regression model with a manure training data, and
the trained crop residue management model is generated by training the ML-based regression model with a crop residue training data.

7. The processor-implemented method (300) as claimed in claim 1, wherein recommending the adaptive crop protocol of the crop to be cultivated by the user, based on the plurality of transformed user goals, using a trained ensemble model and an agriculture operation sequencing technique, comprises:
generating a plurality of agriculture operation sequences, based on the one or more agriculture operations, using the agriculture operation sequencing technique (310a);
determining an optimal agriculture operation sequence among the plurality of agriculture operation sequences, based on the plurality of transformed user goals (310b); and
determining the adaptive crop protocol of the crop to be cultivated by the user, using the optimal agriculture operation sequence and the trained ensemble model, based on the plurality of transformed user goals, wherein:
the trained tillage management model takes the transformed methane emission to be achieved, the nitrous oxide emission to be achieved, and the transformed CSEQ to be achieved as an input and predicts a type of tillage operation as an output,
the trained water management model takes the transformed crop yield to be achieved, the transformed water usage to be achieved, the transformed methane emission to be achieved, and the transformed CSEQ to be achieved as the input and predicts a type of water operation as the output,
the trained nitrogen management model takes the transformed crop yield to be achieved, and the transformed nitrous oxide emission to be achieved as the input and predicts an amount of nitrogen as the output,
the trained manure management model takes the transformed crop yield to be achieved, the transformed nitrous oxide emission to be achieved, the transformed CSEQ to be achieved as the input and predicts an amount of manure as the output, and
the trained crop residue management model takes the transformed CSEQ to be achieved as the input and predicts an amount of crop residue as the output (310c).

8. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive via the one or more I/O interfaces (106), (i) a plurality of crop related parameters from a user, (ii) one or more soil related parameters, (iii) one or more weather related parameters, and (vi) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user;
estimate one or more missing optional goals out of the plurality of user goals of the user, based on the one or more scenario parameters of the scenario, using a goal estimation technique;
determine a set of scenario bounds for each of the plurality of user goals for the scenario selected by the user, based on the one or more soil related parameters, the one or more weather related parameters, and the agriculture operations data and the user goal impact data, using a scenario bound estimation technique;
transform the one or more user goals and the one or more missing optional goals of the user, using the set of scenario bounds for each of the one or more user goals, to obtain a plurality of transformed user goals for the scenario selected by the user; and
recommend the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations.

9. The system (100) as claimed in claim 8, wherein the one or more hardware processors (104) are further configured by the instructions to estimate a Yield At Cost of Environment (YACE) index for the recommended adaptive crop protocol of the crop for the scenario, using a trained YACE index estimation model based on the plurality of transformed user goals.

10. The system (100) as claimed in claim 9, wherein the one or more hardware processors (104) are configured to generate the trained YACE index estimation model, by:
receiving a plurality of user goal sets from a scenario dataset, wherein each user goal set of the plurality of user goal sets comprises one or more historical user goals;
determining a YACE index label for each user goal set of the plurality of user goal sets, using (i) an environmental impact index (EII), and (ii) a crop protocol proximity score (CPPS); and
training a machine learning (ML)-based regression model with the plurality of user goal sets and the YACE index label for each user goal set of the plurality of user goal sets, to obtain the trained YACE index estimation model.

11. The system (100) as claimed in claim 8, wherein:
the plurality of user goals of the user are the one or more user goals and the one or more missing optional goals, and comprises (i) a percentage of a crop yield potential to be achieved, (ii) a percentage of a water usage reduction to be achieved, (iii) a percentage of a methane emission reduction to be achieved, (iv) a percentage of a nitrous oxide emission reduction to be achieved, and (v) a percentage of a carbon sequestration (CSEQ) to be achieved,
the one or more scenario parameters of the scenario selected by the user comprises (i) a global positioning system (GPS) location data of an agriculture area where the crop is to be cultivated, (ii) a soil type of the agriculture area, and (iii) a crop type and a crop variety of the crop to be cultivated,
the plurality of transformed user goals comprises (i) a transformed crop yield to be achieved, (ii) a transformed water usage to be achieved, (iii) a transformed methane emission to be achieved, (iv) a nitrous oxide emission to be achieved, and (v) a transformed CSEQ to be achieved,
the one or more agriculture operations to be performed comprises (i) a tillage operation, (ii) a water management, (iii) a nitrogen management, (iv) a manure management, and (v) a crop residue management, and
the set of scenario bounds for each of the one or more user goals comprises (i) a minimum bound, and (ii) a maximum bound.

12. The system (100) as claimed in claim 8, wherein the one or more hardware processors (104) are configured to determine the set of scenario bounds for each of the plurality of user goals for the scenario selected by the user, based on the one or more soil related parameters, the one or more weather related parameters, and the agriculture operations data and the user goal impact data, using a scenario bound estimation technique, by:
generating a set of crop protocol templates from the one or more soil related parameters, the one or more weather related parameters, and the agriculture operations data and the user goal impact data, using a generative artificial intelligence (AI) model, wherein each crop protocol template of the set of crop protocol templates comprises the one or more agriculture operations;
generating a scenario dataset of each crop protocol template of the set of crop protocol templates, using an agriculture-process (Ag-process) model, wherein the scenario dataset comprises one or more data records of the plurality of user goals and the set of crop protocol templates; and
determining the set of scenario bounds for each of the plurality of user goals for the scenario selected by the user, using the generated scenario dataset.

13. The system (100) as claimed in claim 8, wherein the trained ensemble model is a combination of one or more of: (i) a trained tillage management model, (ii) a trained water management model, (iii) a trained nitrogen management model, (iv) a trained manure management model, and (v) a trained crop residue management model, and wherein:
the trained tillage management model is generated by training a machine learning (ML)-based classification model with a tillage training data,
the trained water management model is generated by training the ML-based classification model with a water training data,
the trained nitrogen management model is generated by training a ML-based regression model with a nitrogen training data,
the trained manure management model is generated by training the ML-based regression model with a manure training data, and
the trained crop residue management model is generated by training the ML-based regression model with a crop residue training data.

14. The system (100) as claimed in claim 8, wherein the one or more hardware processors (104) are configured to recommend the adaptive crop protocol of the crop to be cultivated by the user, based on the plurality of transformed user goals, using a trained ensemble model and an agriculture operation sequencing technique, by:
generating a plurality of agriculture operation sequences, based on the one or more agriculture operations, using the agriculture operation sequencing technique;
determining an optimal agriculture operation sequence among the plurality of agriculture operation sequences, based on the plurality of transformed user goals; and
determining the adaptive crop protocol of the crop to be cultivated by the user, using the optimal agriculture operation sequence and the trained ensemble model, based on the plurality of transformed user goals, wherein:
the trained tillage management model takes the transformed methane emission to be achieved, the nitrous oxide emission to be achieved, and the transformed CSEQ to be achieved as an input and predicts a type of tillage operation as an output,
the trained water management model takes the transformed crop yield to be achieved, the transformed water usage to be achieved, the transformed methane emission to be achieved, and the transformed CSEQ to be achieved as the input and predicts a type of water operation as the output,
the trained nitrogen management model takes the transformed crop yield to be achieved, and the transformed nitrous oxide emission to be achieved as the input and predicts an amount of nitrogen as the output,
the trained manure management model takes the transformed crop yield to be achieved, the transformed nitrous oxide emission to be achieved, the transformed CSEQ to be achieved as the input and predicts an amount of manure as the output, and
the trained crop residue management model takes the transformed CSEQ to be achieved as the input and predicts an amount of crop residue as the output.

15. One or more non-transitory machine-readable information storage mediums comprising one or more instructions which when executed by one or more hardware processors cause:
receiving, via one or more input/output (I/O) interfaces, (i) a plurality of crop related parameters from a user, (ii) one or more soil related parameters, (iii) one or more weather related parameters, and (vi) an agriculture operations data and a user goal impact data, for recommending an adaptive crop protocol to the user, wherein the plurality of crop related parameters comprises (i) one or more user goals out of a plurality of user goals of the user, and (ii) one or more scenario parameters of a scenario selected by the user;
estimating, one or more missing optional goals out of the plurality of user goals of the user, based on the one or more scenario parameters of the scenario, using a goal estimation technique;
determining, a set of scenario bounds for each of the plurality of user goals for the scenario selected by the user, based on the one or more soil related parameters, the one or more weather related parameters, and the agriculture operations data and the user goal impact data, using a scenario bound estimation technique;
transforming, the one or more user goals and the one or more missing optional goals of the user, using the set of scenario bounds for each of the one or more user goals, to obtain a plurality of transformed user goals for the scenario selected by the user; and
recommending, the adaptive crop protocol of a crop to be cultivated by the user, based on the plurality of transformed user goals, using a trained ensemble model and an agriculture operation sequencing technique, wherein the adaptive crop protocol of the crop comprises an optimal sequence of the one or more agriculture operations.
